(19) Europäisches Patentamt
European Patent Office
Office européen des brevets

(11) EP 0 580 872 B1

(12) **EUROPEAN PATENT SPECIFICATION**

(45) Date of publication and mention of the grant of the patent:
**19.03.1997 Bulletin 1997/12**

(21) Application number: **93904302.2**

(22) Date of filing: **12.02.1993**

(51) Int Cl.6: **C08L 59/00**, C08K 5/13, C08K 5/51, C08K 5/32, C08K 5/17, C08K 3/22, C08K 5/05

(86) International application number:
**PCT/JP93/00180**

(87) International publication number:
**WO 93/16134 (19.08.1993 Gazette 1993/20)**

(54) **POLYOXYMETHYLENE COMPOSITION AND MOLDED ARTICLE**
POLYOXYMETHYLENZUSAMMENSETZUNG UND FORMKÖRPER
COMPOSITION DE POLYOXYMETHYLENE ET ARTICLE MOULE

(84) Designated Contracting States:
**DE ES FR GB IT**

(30) Priority: **12.02.1992 JP 25199/92**

(43) Date of publication of application:
**02.02.1994 Bulletin 1994/05**

(73) Proprietor: **POLYPLASTICS CO. LTD.**
**Chuo-Ku Osaka-shi Osaka 541 (JP)**

(72) Inventor: **KUDOH, Masahiro**
**Ihara-gun, Shizuoka 421-33 (JP)**

(74) Representative: **Jackson, Peter**
**HYDE, HEIDE & O'DONNELL**
**10-12 Priests Bridge**
**London SW15 5JE (GB)**

(56) References cited:
**CH-A- 670 094**
**JP-A- 1 275 652**
**JP-A-52 119 652**
**JP-A-54 013 551**
**US-A- 4 872 338**

- **PATENT ABSTRACTS OF JAPAN vol. 15, no. 173 (C-828)2 May 1991 & JP-03 039 351 (ASAHI CHEM IND CO LTD) 20 February 1991**
- **KUNSTSTOFFE vol. 68, no. 10 , 1978 , MUNCHEN DE pages 621 - 624 VON HORST ET AL. 'Technische Funktionsteile aus Polyacetal für die Sanitärbereich'**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 580 872 B1

Printed by Jouve, 75001 PARIS (FR)

## Description

### Field of the Invention

The present invention relates to a polyoxymethylene composition having an excellent resistance to an aqueous hypochlorite solution, particularly a composition prepared by blending polyoxymethylene with a hindered phenol compound, a specified phosphorus compound and a specified nitrogenous or metallic compound, and a part or container molded from the composition.

### Related Art

A polyoxymethylene resin has well-balanced mechanical properties, high heat resistance, fatigue resistance higher than that of any other plastic, excellent friction and wear characteristics and excellent chemical resistance. Thus, a polyoxymethylene resin serves as an excellent engineering plastic; still, the resin is required to have a further improved resistance to chemicals such as an aqueous hypochlorite solution, when applied to some fields. Such a field requiring a further improvement in the chemical resistance includes city water-related parts such as pipe, joint and water meter; mechanical parts of a water boiler, dishwasher or washing machine; and a container, stopper and spray part for various bleaching agents or chlorinated detergents.

Up to this time, polyoxymethylene has been mainly used asthe material of the mechanical parts of a water meter or the like. However, the amount of calcium hypochlorite added to city water as a bacteriocide has recently increased with a lowering in the quality of service water supplied to midtown and industrial areas, so that the inner part of a water meter or the like undergoes blushing and peeling before its guaranteed life expires and the resin peeling off from the surface of the part clogs a pipe to impair the function thereof unfavorably. Accordingly, an improvement in this respect has been expected.

Generally, a hindered phenol antioxidant or a heat stabilizer such as polyamide or a hydroxide or organic or inorganic acid salt of an alkali or alkaline earth metal is added to polyoxymethylene.

In particular, Swiss Patent 670 094 discloses a resin composition which comprises at least one synthetic resin and a stabiliser of the following general formula:

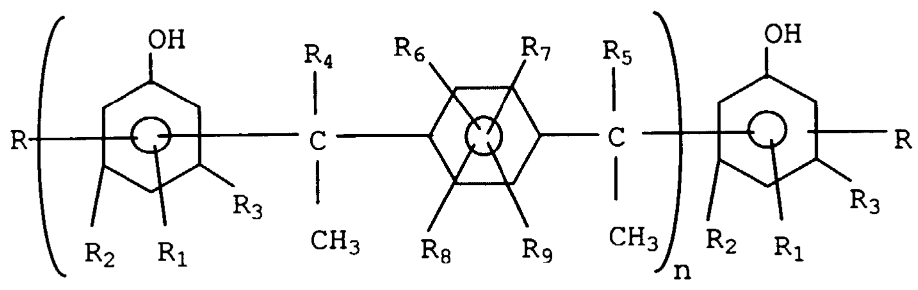

R is a tertiary $C_4$ to $C_8$ alkyl group
$R_1$ is a $C_1$ to $C_5$ alkyl group or a $C_1$ to $C_5$ alkoxy group
$R_2$ and $R_3$ are independently H, a $C_1$ to $C_5$ alkyl group, or a $C_1$ to $C_5$ alkoxy group
$R_4$ to $R_9$ are independently H or a $C_1$ to $C_5$ alkyl group, and
n is 2 or more, generally 75 or less.

However, the above addition is insufficient to solve the above problem. Particularly, a large amount of an additive must be added to enhance the resistance of polyoxymethylene to an aqueous solution of sodium hypochlorite. The addition of a large amount of an additive, however, causes blooming of a stabilizer or the like and brings about significant adhesion thereof to a mold as mold deposit, thus being disadvantageous to mass production. Further, the addition is also costly, so that a further improvement has been expected.

### Disclosure of the Invention

The present inventors have extensively studied to obtain a polyoxymethylene composition satisfying the above requirement and have found that the behavior of polyoxymethylene against an aqueous hypochlorite solution can be improved by adding at least three components, i.e., a hindered phenol compound, a specified phosphorus compound and a specified nitrogenous or metallic compound. The present invention has been accomplished on the basis of this finding.

Namely, the present invention relates to a polyoxymethylene composition having an excellent resistance to an aqueous hypochlorite solution, which comprises

(A) 100 parts by weight of polyoxymethylene, and, incorporated therewith,
(B) 0.01 to 5 parts by weight of a hindered phenol compound as specified in claim 1,
(C) 0.01 to 5 parts by weight of a phosphorus compound represented by the general formulae (I) or (II), and
(D) 0.01 to 5 parts by weight of at least one compound selected from among nitrogen compounds (D-1) represented by the formulae (III) or (IV), metal oxides (D-2) represented by the formula (V) and metal hydroxides or alkoxides (D-3) represented by the general formula (VI),

and a molded article made therefrom which is used in water-related fields such as water supply:

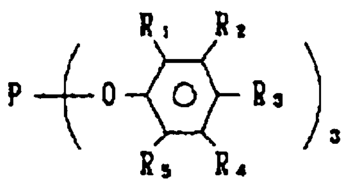

(I)

wherein $R_1$ to $R_5$ each represent hydrogen, a saturated or unsaturated, linear or branched alkyl group having 1 to 20 carbon atoms, an alkoxy group, a substituted or unsubstituted phenyl group or a substituted or unsubstituted phenyloxy group,

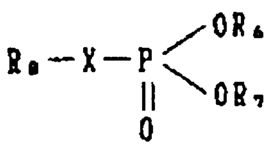

(II)

wherein $R_6$ and $R_7$ each represent a saturated or unsaturated, linear or branched alkyl group having 1 to 20 carbon atoms;

$R_8$ represents a substituted or unsubstituted phenyl group, a 4-hydroxy-substituted phenyl, a substituted or unsubstituted 4-piperidinyl group, a substituted or unsubstituted 3-pyrrolidinyl group or hydrogen; and X represents a saturated or unsaturated, linear or branched alkylene group having 1 to 20 carbon atoms which may have an ether or ester bond in the molecular chain thereof or X may be absent,

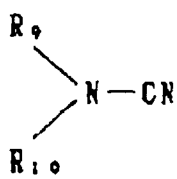

(III)

wherein $R_9$ and $R_{10}$ each represent a saturated or unsaturated, linear or branched alkyl group having 1 to 20 carbon atoms,

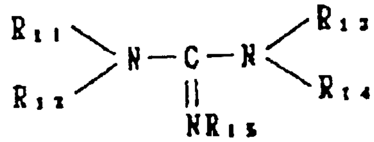

(IV)

wherein $R_{11}$ to $R_{15}$ each represent a saturated or unsaturated, linear or branched alkyl group having 1 to 20 carbon atoms or a substituted or unsubstituted phenyl group which may have an ether, ester or amide bond or the like in the molecular chain thereof,

$$M_1O \qquad (V)$$

wherein $M_1$ represents Mg, Ca, Ba or Zn,

$$M_2(OR_{16})_m \qquad (VI)$$

wherein $M_2$ represents K, Na, Mg, Ca, Ba or Zn;
$R_{16}$ represents an alkyl group having 1 to 18 carbon atoms or hydrogen; and
m represents 1 or 2.

The constitution of the present invention will now be described in detail.

The polyoxymethylene to be used in the present invention as the component (A) is a polymer comprising, as its mainly constituent units oxymethylene groups ($-CH_2O-$), which may be either a polyoxymethylene homopolymer or a copolymer, terpolymer or block copolymer containing a small amount of other constituent units in addition to oxymethylene groups. Further, the polyoxymethylene may be either a linear one or a branched or crosslinked one. Furthermore, the degree of polymerization thereof is not particularly limited.

The hindered phenol compound (B) to be used in the present invention includes 2,2-methylenebis-(4-methyl-6-t-butylphenol), 1,6-hexanediol-bis[3-(3,5-di-t-butyl-4-hydroxyphenyl)propionate]. pentaerythritol tetrakis[3-(3,5-di-t-butyl-4-hydroxy-phenyl)propionate], triethylene glycol-bis[3-(3-t-butyl-5-methyl-4-hydroxyphenyl)propianate], 1,3,5-trimethyl-2,4,6-tris(3,5-di-t-butyl-4-hydroxybenzyl)benzene, n-octadecyl-3-(4' -hydroxy-3' ,5' -di-t-butylphenol)propionate, 4,4' -methylenebis-(2,6-di-t-butylphenol), 4,4'-butylidene-bis(6-t-butyl-3-methyl-phenol) 2,2'-thiodiethyl-bis[3-(3,5-di-t-butyl-4-hydroxyphenyl)propionate], di-stearyl-3,5-di-t-butyl-4-hydroxybenzylphosphonate, 2-t-butyl-6-(3-t-butyl-5-methyl-2-hydroxybenzyl)-4-methylphenyl acrylate, N,N'-hexamethylenebis(3,5-di-t-butyl-4-hydroxy-hydrocinnamamide), 4,4'-methylenebis(2-methyl-6-t-butylphenol), dioctadecyl ester of (3-methyl-4-hydroxy-5-t-butylbenzyl)-malonate, 2,2'-butylidene-bis-(4,6-dimethylphenol), 2,2'-butylidene-4,6-dimethylphenol-4',6'-di-t-butylphenol, 2,2'-butylidene-bis-(4-t-butyl-6-methylphenol), 2,2'-methylene-bis-(4,6-dimethylphenol), 4,4'-methylene-bis-(2,6-dimethylphenol) and 2,2'-dihydroxy-3,3',5,5'-tetramethylstilbene, which may be used either alone or as a mixture of two or more of them. Among these compounds, those represented by the general formula (VII) are preferable.

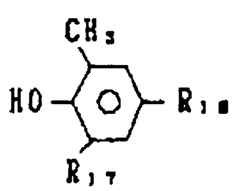

(VII)

wherein $R_{17}$ represents a saturated or unsaturated, linear or branched alkyl group having 1 to 20 carbon atoms; and

$R_{18}$ represents a saturated or unsaturated, linear or branched alkyl group having 1 to 20 carbon atoms or a substituted or unsubstituted phenyl group which may have an ether, ester or amide bond in the molecular chain thereof.

Specific examples thereof include triethylene glycol-bis-[3-(3-t-butyl-5-methyl-4-hydroxyphenyl)propionate], 4,4'-methylenebis-(2-methyl-6-t-butylphenol), dioctadecyl ester of (3-methyl-4-hydroxy-5-t-butylbenzyl)-malonate and 2,2'-butylidene-bis-(4-t-butyl-6-methylphenol).

According to the present invention, the amount of the hindered phenol compound (B) to be added is 0.01 to 5 parts by weight, preferably 0.3 to 4 parts by weight, still preferably 0.7 to 2 parts by weight based on 100 parts by weight of polyoxymethylene. When the amount is less than 0.01 part by weight, the resulting molded article will suffer from serious peeling and blushing, thus being unfit for practical use, while when it exceeds 5 parts by weight, the resulting molded article will suffer from serious yellowing unfavorably.

Further, the phosphorus compound (C) to be used in the present invention is, as described above, one represented by the general formulae (I) or (II).

Specific examples of the compound represented by the general formula (I) include triphenyl phosphite, trisnonylphenyl phosphite, tris(2,4-di-t-butylphenyl) phosphite, tris(2-t-butyl-4-methylphenyl) phosphite, tris(2,4-di-t-amylphenyl) phosphite, tris(2-t-butyl phenyl) phosphite, tris(2-phenylphenyl) phosphite, tris(2-(1,1-dimethylpropyl)-phenyl) phosphite, tris(2,4-(1,1-dimethylpropyl)-phenyl) phosphite, tris(2-cyclohexylphenyl) phosphite and tris(2-t-butyl-4-phenylphenyl) phosphite.

On the other hand, specific examples of the compound represented by the general formula (II) include diethyl ester of 3,5-di-t-butyl-4-hydroxy-benzylphosphonate, dimethyl ester of bis-(hydroxy-4-phenyl)-1,1-ethylphosphonate, dimethyl ester of bis-(hydroxy-4-phenyl)-2,2-propyl-phosphonate, dimethyl ester of bis-(hydroxy-4-phenyl)-3,3-butyl-phosphonate, diethyl ester of bis-(hydroxy-4-phenyl)-2,2-propyl-phosphonate and dimethyl ester of bis-(4-hydroxy-3,5-di-t-butylphenyl)-2,2-octadecyl-phosphonate, which may be used either alone or as a mixture of two or more of them. Among these compounds, tris(2,4-di-t-butylphenyl) phosphite and diethyl ester of 3,5-di-t-butyl-4-hydroxy-benzyl-phosphonate are particularly preferably ones.

According to the present invention, the amount of the phosphorus compound (C) to be added is 0.01 to 5 parts by weight, preferably 0.3 to 2 parts by weight based on 100 parts by weight of polyoxymethylene. When the amount is less than 0.01 part by weight, the resulting composition will suffer from severe discoloration unfavorably, while when it exceeds 5 parts by weight, the resulting molded article will suffer from heavy blooming, thus being unfit for practical use.

The present invention is characterized by adding a specified component (D) represented by one of the general formulae (III) to (VI) in addition to the above-mentioned hindered phenol compound (B) and phosphorus compound (C) to polyoxymethylene (A), and by employing such a constitution, the present invention makes it possible to provide a composition forming a molded article which little suffers from blistering or peeling on the surface of the molded article or formation of white spots due to partial deterioration, and is suppressed in deterioration of appearance due to deterioration as a whole, for example, blushing or yellowing, in an aqueous hypochlorite solution, thus being suitable for the production of mechanical parts of city water-related appliances.

The nitrogen compound (D-1) which is one of the components (D) used for the above purpose is, as described above, one represented by the general formulae (III) or (IV).

Specific examples of the compound represented by the general formula (III) include dimethylcyanamide and diallylcyanamide.

Specific examples of the compound represented by the general formula (IV) include n-dodecylguanidine, 1,6-diguanidinohexane, tetramethylguanidine, creatinine aminoguanidine, 1-amino-3-salicyloyl-guanidine, cyanoguanidine, cyanoguanidine-formaldehyde condensate, n-butyldicyandiamide, n-pentyldicyandiamide, p-chlorophenyldicyandiamide, guanethidine, and N-amidino-3-amino-6-chloropyrazinecarboxamide, which may be used either alone or a mixture of two or more of them. Among these compounds, cyanoguanidine, aminoguanidine and dimethylcyanamide are particularly preferably ones.

Further, specific examples of the metal oxide (D-2) represented by the general formula (V) include magnesium oxide, calcium oxide, zinc oxide and barium oxide.

Furthermore, specific examples of the metal hydroxide or alkoxide (D-3) represented by the general formula (VI) include sodium methoxide, magnesium ethoxide, sodium hydroxide, potassium hydroxide, potassium methoxide and barium ethoxide.

The compound (D) to be used in the present invention is preferably one exhibiting a strong basicity, for example, one exhibiting a pH of 10 or above in a state of a 1 vol % aqueous solution.

According to the present invention, the amount of the component (D) to be added is 0.01 to 5 parts by weight, preferably 0.05 to 3 parts by weight, still preferably 0.08 to 1 part by weight based on 100 parts by weight of polyoxymethylene. The addition of the component (D) in an amount less than 0.01 part by weight will be effective a little in activating the hindered phenol, so that the molded article will be unfit for practical use because of severe blushing and peeling, while the addition thereof in an amount exceeding 5 parts by weight will give a molded article suffering from intense yellowing unfavorably.

The composition of the present invention may further contain a conventional reinforcement, extender, lubricant, antistatic agent, colorant, carbon black or the like to impart desired characteristics thereto depending upon the object. The reinforcement includes glass fiber, potassium titanate fiber, calcium carbonate fiber, carbon fiber, talc, mica, glass

beads, glass flake and so on. The extender includes calcium carbonate, wollastonite, mineral fibers and so on.

The process for preparing the composition of the present invention is not particularly restricted, and the composition can be easily prepared with conventional equipment for the preparation of resin compositions by a conventional process therefor. For example, the composition can be prepared by any of processes:(i) a process which comprises mixing necessary components together, kneading and extruding the obtained mixture into pellets on an extruder and molding the pellets, (ii) a process which comprises preparing pellets different from each other in their compositions, mixing the pellets at a given ratio and molding the obtained pellet mixture to obtain a molded article having an objective composition, or (iii) a process characterized by feeding one or more of the components directly into a molding machine. Further, a process which comprises preliminarily pulverizing a part of the resin components and mixing the obtained powder with the rest of the components is effective in homogeneous blending of the components.

The polyoxymethylene composition thus prepared is remarkably improved in resistance to an aqueous hypochlorite solution without impairing the mechanical properties, heat resistance and wear and friction characteristics inherent in polyoxymethylene, thereby serving as an excellent chemical-resistant composition. Therefore, the composition is suitable for the production of a mechanical part or vessel of a city water-related appliance such as a water boiler, dishwasher, water meter or washing machine; or a container, stopper or spray part for various bleaching agents or chlorinated detergents.

The resin composition according to the present invention can be molded by any process selected from among extrusion, injection, compression molding, vacuum forming, blow molding and expansion molding.

The polyoxymethylene composition of the present invention and a molded article made therefrom less suffer from peeling or blushing and exhibit a lowered degree of discoloration when used in an aqueous hypochlorite solution, as compared with those of the prior art. Further, the composition of the present invention does not undergo blowing in the residence, so that it is suitable for the production of a container, stopper or spray part for various bleaching agents or chlorinated detergents, or a mechanical part or vessel of a city water-related appliance such as a water boiler, dishwasher, water meter or washing machine.

## Examples

The present invention will now be described more specifically by referring to the following Examples and Comparative Examples. The methods employed in the Examples and Comparative Examples for evaluating the characteristics are as follows.

1) Residence test

Each resin composition was made to remain in an injection machine of a clamping pressure of 75 ton at a cylinder temperature of 200°C for one hour and thereafter injected through a nozzle to evaluate the extent of blowing with the naked eye.

evaluation criteria:

○ no blowing
Δ a little blowing
× severe blowing

2) Immersion test against aqueous solution of sodium hypochlorite (appearance change, discoloration resistance)

An ASTM type I test piece for tensile test made from each composition was immersed in a 0.3 vol % aqueous solution of sodium hypochlorite placed in a pressure test tube made of glass having an inner diameter of 45 mm and fitted with a condenser and the solution was refluxed at 80°C. Samples were taken out at given intervals and evaluated for blistering and peeling of surface, white spot and blushing with the naked eye.

evaluation criteria:

○ scarcely any blister or white spot
Δ several blisters and white spots
× many blisters and white spots
×× peeled and blushed

After the test piece had been subjected to the above treatment for 300 hours, it was examined for degree (ΔE) of discoloration.

That is, the L, a and b values of the Hunter color specification system of the test piece were determined with a digital colormeter (mfd. by Nippon Denshoku Kogyo (K.K.), Z-300A type) to calculate the degree (ΔE) of discoloration

according to the following formula. A smaller $\Delta E$ value means a higher discoloration resistance.

$$\Delta E = \sqrt{(L - L_0)^2 + (a - a_0)^2 + (b - b_0)^2}$$

| | |
|---|---|
| $L_0$, $a_0$, $b_0$: | initial values |
| L, a, b: | values after the test at 80°C for 300 hours |

Examples 1 to 11 and Comparative Examples 1 to 11

An oxymethylene copolymer was blended with various compounds (i.e., components B, C and D) at a ratio specified in Table 1 and the obtained blend was continuously fed into a vented twin-screw extruder (30 mmϕ) and kneaded and extruded at 200°C to give pellets. The pellets were dried in a circulating hot air oven at 130°C for 3 hours.

The resulting pellets were injection molded into a test piece and the above characteristics were evaluated. For comparison, blends characterized by not containing one of the components (B), (C) and (D) and those characterized by containing a phosphorus compound (C') or melamine (D') which is outside the scope of the present invention were also prepared and evaluated. The results are given in Tables 1 and 2.

Table 1

| | | Example No. | | | | | | | | | | |
|---|---|---|---|---|---|---|---|---|---|---|---|---|
| | | 1 | 2 | 3 | 4 | 5 | 6 | 7 | 8 | 9 | 10 | 11 |
| (A) polyoxymethylene | kind | $A_1$ | $A_1$ | $A_1$ | $A_1$ | $A_1$ | $A_1$ | $A_1$ | $A_1$ | $A_2$ | $A_1$ | $A_1$ |
| | pt. wt. | 100 | 100 | 100 | 100 | 100 | 100 | 100 | 100 | 100 | 100 | 100 |
| (B) hindered phenol compd. | kind | $B_1$ | $B_1$ | $B_1$ | $B_1$ | $B_1$ | $B_1$ | $B_2$ | $B_3$ | $B_1$ | $B_1$ | $B_1$ |
| | pt. wt. | 0.5 | 1.0 | 1.0 | 1.0 | 1.0 | 1.0 | 1.0 | 1.0 | 1.0 | 1.0 | 1.0 |
| (C) phosphorus compd. | kind | $C_1$ | $C_1$ | $C_1$ | $C_2$ | $C_2$ | $C_2$ | $C_2$ | $C_2$ | $C_2$ | $C_2$ | $C_2$ |
| | pt. wt. | 0.5 | 0.5 | 0.5 | 0.5 | 0.5 | 0.5 | 0.5 | 0.5 | 0.5 | 0.5 | 0.5 |
| (D) nitrogenous or metallic compd. | kind | $D_1$ | $D_1$ | $D_2$ | $D_1$ | $D_2$ | $D_2$ | $D_2$ | $D_2$ | $D_2$ | $D_3$ | $D_4$ |
| | pt. wt. | 0.1 | 0.1 | 0.1 | 0.1 | 0.1 | 0.3 | 0.1 | 0.1 | 0.1 | 0.1 | 0.1 |
| Residence test | | ○ | ○ | ○ | ○ | ○ | ○ | ○ | ○ | ○ | ○ | ○ |
| Resistance to NaOCl | 100 hr | ○ | ○ | ○ | ○ | ○ | ○ | ○ | ○ | ○ | ○ | ○ |
| | 200 hr | ○ | ○ | ○ | ○ | ○ | ○ | ○ | ○ | ○ | ○ | ○ |
| | 300 hr | △ | ○ | ○ | ○ | ○ | ○ | ○ | ○ | ○ | ○ | ○ |
| | degree of discoloration (300 hr) | 0.8 | 1.0 | 1.1 | 1.0 | 1.1 | 1.2 | 5.5 | 10.2 | 1.1 | 1.0 | 1.2 |

Table 2

| | | Comp. Example No. | | | | | | | | | | |
|---|---|---|---|---|---|---|---|---|---|---|---|---|
| | | 1 | 2 | 3 | 4 | 5 | 6 | 7 | 8 | 9 | 10 | 11 |
| (A) polyoxymethylene | kind | $A_1$ | $A_1$ | $A_1$ | $A_1$ | $A_1$ | $A_1$ | $A_1$ | $A_1$ | $A_1$ | $A_1$ | $A_2$ |
| | pt. wt. | 100 | 100 | 100 | 100 | 100 | 100 | 100 | 100 | 100 | 100 | 100 |
| (B) hindered phenol compd. | kind | | $B_1$ | $B_1$ | $B_1$ | $B_1$ | $B_1$ | $B_1$ | $B_1$ | $B_2$ | $B_3$ | $B_1$ |
| | pt. wt. | | 0.5 | 0.5 | 0.5 | 0.5 | 0.5 | 1.0 | 1.0 | 1.0 | 1.0 | 1.0 |
| (C) phosphorus compd. | kind | $C_1$ | | $C_1$ | $C_1'$ | $C_2'$ | $C_1$ | $C_1$ | $C_2$ | $C_1'$ | $C_1'$ | $C_1'$ |
| | pt. wt. | 0.5 | | 0.5 | 0.5 | 0.5 | 0.5 | 0.5 | 0.5 | 0.5 | 0.5 | 0.5 |
| (D) nitrogenous or metallic compd. | kind | $D_1$ | $D_1$ | | $D_1$ | $D_1$ | $D_1'$ | | | $D_1$ | $D_1$ | |
| | pt. wt. | 0.1 | 0.1 | | 0.1 | 0.1 | 0.1 | | | 0.1 | 0.1 | |
| Residence test | | ○ | ○ | ○ | × | × | ○ | ○ | ○ | × | × | ○ |
| Resistance to NaOCl | 100 hr | ×× | ○ | × | ○ | ○ | × | △ | △ | ○ | ○ | △ |
| | 200 hr | — | △ | — | △ | △ | — | × | × | ○ | ○ | × |
| | 300 hr | — | × | — | × | × | — | — | — | △ | △ | — |
| | degree of discoloration (300 hr) | — | 2.5 | — | 0.9 | 1.0 | — | — | — | 6.0 | 10.8 | .. |

note)

$A_1$: polyoxymethylene copolymer MI=9.0 g/10 min

$A_2$: polyoxymethylene copolymer MI=27.0 g/10 min

$B_1$: triethylene glycol-bis-[3-(3-t-butyl-5-methyl-4-hydroxyphenyl)propionate]

$B_2$: 1,6-hexanediol-bis-[3-(3,5-di-t-butyl-4-hydioxyphenyl)propionate]

$B_3$: pentaerythrityl-tetrakis-[3-(3,5-di-t-butyl-4-hydroxyphenyl)propionate]

$C_1$: diethyl ester of 3,5-di-t-butyl-4-hydroxy-benzylphosphonate

$C_2$: tris-(2,4-di-t-butylphenyl) phosphite

$C_1'$: tridecyl phosphite

$C_2'$: 3,9-distearyloxy-2,4,8,10-tetraoxa-3,9-diphospha-spiro[5.5]undecane

$D_1$: aminoguanidine

$D_2$: cyanoguanidine

$D_3$: magnesium oxide

$D_4$: magnesium ethoxide

$D_1'$: melamine

## Claims

1. A polyoxymethylene composition having an excellent resistance to an aqueous hypochlorite solution, which comprises:

   (A) 100 parts by weight of polyoxymethylene, and, incorporated therewith,
   (B) 0.01 to 5 parts by weight of a hindered phenol compound,
   (C) 0.01 to 5 parts by weight of a phosphorus compound represented by the following general formulae (I) or (II), and
   (D) 0.01 to 5 parts by weight of at least one compound selected from among nitrogen compounds (D-1) represented by the following general formulae (III) or (IV), metal oxides (D-2) represented by the following general formula (V) and metal hydroxides or alkoxides (D-3) represented by the following general formula (VI):

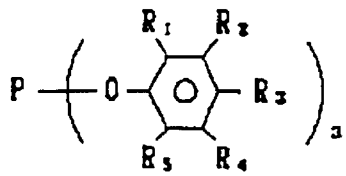

(I)

wherein $R_1$ to $R_5$ each represent hydrogen, a saturated or unsaturated, linear or branched alkyl group having 1 to 20 carbon atoms, an alkoxy group, a substituted or unsubstituted phenyl group or a substituted or unsubstituted phenyloxy group,

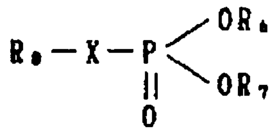

(II)

wherein $R_6$ and $R_7$ each represent a saturated or unsaturated, linear or branched alkyl group having 1 to 20 carbon atoms,
$R_8$ represents a substituted or unsubstituted phenyl group, a 4-hydroxy-substituted phenyl, a substituted or unsubstituted 4-piperidinyl group, a substituted or unsubstituted 3-pyrrolidinyl group or hydrogen, and X represents a saturated or unsaturated, linear or branched alkylene group having 1 to 20 carbon atoms which may have an ether or ester bond in the molecular chain thereof or X may be absent,

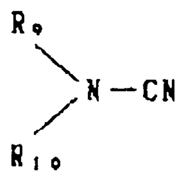

(III)

wherein $R_9$ to $R_{10}$ each represent a saturated or unsaturated, linear or branched alkyl group having 1 to 20 carbon atoms,

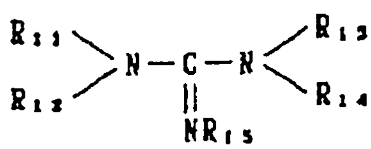

(IV)

wherein $R_{11}$ to $R_{15}$ each represent a saturated or unsaturated, linear or branched alkyl group having 1 to 20 carbon atoms or a substituted or unsubstituted phenyl group which may have an ether, ester or amide bond the molecular chain thereof,

$$M_1O \qquad (V)$$

wherein $M_1$ represents Mg, Ca, Ba or Zn, and

$$M_2(OR_{16})_m \qquad (VI)$$

wherein $M_2$ represents K, Na, Mg, Ca, Ba or Zn,

$R_{16}$ represents an alkyl group having 1 to 18 carbon atoms or hydrogen, and
m represents 1 or 2, and

wherein the hindered phenol compound (B) is either represented by the following general formula (VII):

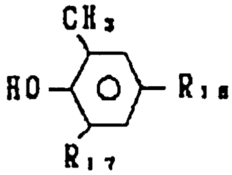

(VII)

wherein $R_{17}$ represents a saturated or unsaturated, linear or branched alkyl group having 1 to 20 carbon atoms, and $R_{18}$ represents a saturated or unsaturated, linear or branched alkyl group having 1 to 20 carbon atoms or a substituted or unsubstituted phenyl group which may have an ether, ester or amide bond in the molecular chain thereof or is selected from 1,6-hexanediol-bis[3-(3,5-di-t-butyl-4-hydroxyphenyl) propionate], and pentaerythritol tetrakis[3-(3,5-di-t-butyl-4-hydroxyphenyl)propionate].

**2.** A composition according to Claim 1, wherein the phosphorus compound (C) is tris-(2,4-di-t-butylphenyl) phosphite or diethyl ester of 3,5-di-t-butyl-4-hydroxybenzylphosphonate.

**3.** A composition according to Claim 1, wherein the nitrogen compound (D-1) is cyanoguanidine, aminoguanidine or dimethylcyanamide.

**4.** A molded part or vessel having an excellent resistance to an aqueous solution containing sodium hypochlorite which is made by molding the polyoxymethylene composition according to Claim 1.

**5.** A molding according to Claim 4, which serves as a container, stopper or spray part for bleaching agents or chlorinated detergents, or a mechanical part or vessel of a water boiler, dishwasher, water meter or washing machine.

## Patentansprüche

**1.** Polyoxymethylen-Zusammensetzung, die eine ausgezeichnete Beständigkeit gegenüber einer wäßriger Hypochlorit-Lösung aufweist, umfassend:

(A) 100 Gewichtsteile Polyoxymethylen, und darin eingebaut
(B) 0,01 bis 5 Gewichtsteile einer Verbindung eines gehinderten Phenols,
(C) 0,01 bis 5 Gewichtsteile einer Phosphor-Verbindung, dargestellt durch die allgemeinen Formeln (I) oder (II), und
(D) 0,01 bis 5 Gewichtsteile wenigstens einer Verbindung, die ausgewählt ist aus Stickstoff-Verbindungen (D-1), dargestellt durch die folgenden allgemeinen Formeln (III) oder (IV), Metalloxiden (D-2), dargestellt durch die folgende allgemeine Formel (V) und Metallhydroxiden oder -alkoxiden (D-3), dargestellt durch die folgende allgemeine Formel (VI):

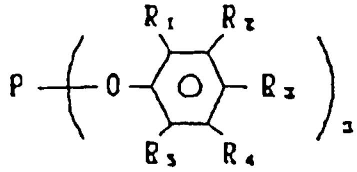

(I)

worin $R_1$ bis $R_5$ jeweils Wasserstoff, eine gesättigte oder ungesättigte, lineare oder verzweigte Alklygruppe mit 1 bis 20 Kohlenstoffatomen, eine Alkoxygruppe, eine substituierte oder unsubstituierte Phenylgruppe oder

eine substituierte oder unsubstituierte Phenyloxygruppe darstellen,

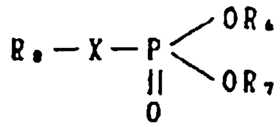

(II)

,

worin $R_6$ und $R_7$ jeweils eine gesättigte oder ungesättigte, lineare oder verzweigte Alkylgruppe mit 1 bis 20 Kohlenstoffatomen darstellen,

$R_8$ eine substituierte oder unsubstituierte Phenylgruppe, ein 4-Hydroxy-substituiertes Phenyl, eine substituierte oder unsubstituierte 4-Piperidinylgruppe, eine substituierte oder unsubstituierte 3-Pyrrolidinylgruppe oder Wasserstoff darstellt, und X eine gesättigte oder ungesättigte, lineare oder verzweigte Alkylengruppe mit 1 bis 20 Kohlenstoffatomen darstellt, und die eine Ether- oder Esterbindung in der molekularen Kette derselben aufweisen kann, oder X nicht vorliegen kann,

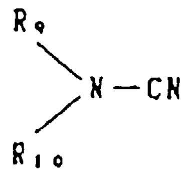

(III)

,

worin $R_9$ bis $R_{10}$ jeweils eine gesättigte oder ungesättigte, lineare oder verzweigte Alkylgruppe mit 1 bis 20 Kohlenstoffatomen darstellen,

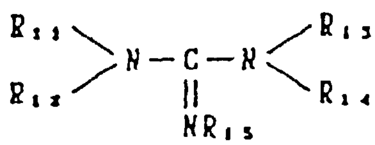

(IV)

,

worin $R_{11}$ bis $R_{15}$ jeweils eine gesättigte oder ungesättigte, lineare oder verzweigte Alkylgruppe mit 1 bis 20 Kohlenstoffatomen oder eine substituierte oder unsubstituierte Phenylgruppe, die eine Ether-, Ester- oder Amidbindung in der molekularen Kette derselben aufweisen kann, darstellen,

$$M_1O \quad \text{(V)},$$

worin $M_1$ Mg, Ca, Ba oder Zn darstellt, und

$$M_2(OR_{16})_m \quad \text{(VI)},$$

worin $M_2$ K, Na, Mg, Ca, Ba oder Zn darstellt, $R_{16}$ eine Alkylgruppe mit 1 bis 18 Kohlenstoffatomen oder Wasserstoff darstellt, und m 1 oder 2 ist, und worin die Verbindung des gehinderten Phenols (B) entweder durch die folgende allgemeine Formel (VII)

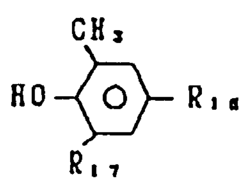

(VII)

dargestellt wird, worin $R_{17}$ eine gesättigte oder ungesättigte, lineare oder verzweigte Alkylgruppe mit 1 bis 20 Kohlenstoffatomen darstellt, und $R_{18}$ eine gesättigte oder ungesättigte, lineare oder verzweigte Alkylgruppe mit 1 bis 20 Kohlenstoffatomen oder eine substituierte oder unsubstituierte Phenylgruppe, die eine Ether-, Ester- oder Amidbindung in der molekularen Kette derselben aufweisen kann, darstellt,
oder aus 1, 6-Hexandiol-bis[3-(3, 5-di-t-butyl-4-hydroxyphenyl)propionat] und Pentaerythrittetrakis[3-(3,5-di-t-butyl-4-hydroxyphenyl)propionat] ausgewählt ist.

2. Zusammensetzung gemäß Anspruch 1, worin die PhosphorVerbindung (C) Tris-(2,4-di-t-butylphenyl)phosphit oder der Diethylester von 3,5-Di-t-butyl-4-hydroxybenzylphosphonat ist.

3. Zusammensetzung gemäß Anspruch 1, worin die Stickstoff-Verbindung (D-1) Cyanoguanidin, Aminoguanidin oder Dimethylcyanamid ist.

4. Geformtes Teil oder Gefäß, das eine ausgezeichnete Beständigkeit gegenüber einer Natriumhypochlorit enthaltenden, wäßrigen Lösung hat, welches durch Formen der Polyoxymethylen-Zusammensetzung gemäß Anspruch 1 hergestellt wird.

5. Formteil gemäß Anspruch 4, das als ein Behälter, Stopfen oder Sprühteil für bleichende Substanzen oder chlorierte Waschmittel, oder als ein mechanisches Teil oder Gefäß eines Wasserboilers, einer Geschirrspülmaschine, eines Wassermeßgeräts oder einer Waschmaschine dient.

## Revendications

1. Composition de polyoxyméthylène ayant une excellente résistance à une solution aqueuse d'hypochlorite, comprenant :

(A) 100 parties en poids de polyoxyméthylène, dans lesquelles sont incorporées :
(B) 0,01 à 5 parties en poids d'un composé phénolique empêché,
(C) 0,01 à 5 parties en poids d'un composé du phosphore représenté par la formule générale (I) ou (II) suivante, et
(D) 0,01 à 5 parties en poids d'au moins un composé choisi parmi les composés azotés (D-1) représentés par la formule générale (III) ou (IV) suivante, les oxydes métalliques (D-2) représentés par la formule générale (V) suivante, et les hydroxydes ou les alcoxydes métalliques (D-3) représentés par la formule générale (VI) suivante :

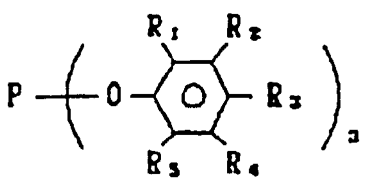

(I)

où $R_1$ à $R_5$ représentent chacun l'hydrogène, un groupe alkyle, saturé ou insaturé, linéaire ou ramifié, ayant de 1 à 20 atomes de carbone, un groupe alcoxy, un groupe phényle substitué ou non substitué, ou un groupe phényloxy substitué ou non substitué,

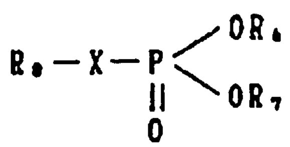

(II)

où $R_6$ et $R_7$ représentent chacun un groupe alkyle, saturé ou insaturé, linéaire ou ramifié, ayant de 1 à 20 atomes de carbone,
$R_8$ représente un groupe phényle substitué ou non substitué, un groupe phényle à substitution 4-hydroxy, un

groupe 4-pipéridinyle substitué ou non substitué, un groupe 3-pyrrolidinyle substitué ou non substitué, ou l'hydrogène, et X représente un groupe alkylène, saturé ou insaturé, linéaire ou ramifié, ayant de 1 à 20 atomes de carbone, qui peut avoir une liaison éther ou ester dans sa chaîne moléculaire, ou X peut être absent,

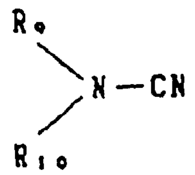

(III)

où $R_9$ et $R_{10}$ représentent chacun un groupe alkyle, saturé ou insaturé, linéaire ou ramifié, ayant de 1 à 20 atomes de carbone,

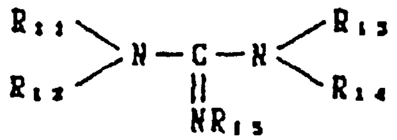

(IV)

où $R_{11}$ à $R_{15}$ représentent chacun un groupe alkyle, saturé ou insaturé, linéaire ou ramifié, ayant de 1 à 20 atomes de carbone, ou un groupe phényle, substitué ou non substitué, qui peut avoir une liaison éther, ester ou amide dans sa chaîne moléculaire,

$$M_1O \qquad (V)$$

où $M_1$ représente Mg, Ca, Ba ou Zn, et

$$M_2(OR_{16})_m \qquad (VI)$$

où $M_2$ représente K, Na, Mg, Ca, Ba ou Zn,

$R_{16}$ représente un groupe alkyle ayant de 1 à 18 atomes de carbone, ou l'hydrogène, et
m représente 1 ou 2, et

dans laquelle le composé phénolique empêché (B) est représenté par la formule générale (VII) :

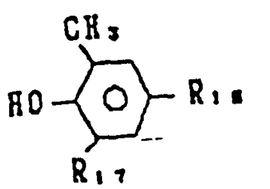

(VII)

où $R_{17}$ représente un groupe alkyle, saturé ou insaturé, linéaire ou ramifié, ayant de 1 à 20 atomes de carbone, et $R_{18}$ représente un groupe alkyle, saturé ou insaturé, linéaire ou ramifié, ayant de 1 à 20 atomes de carbone, ou un groupe phényle, substitué ou non substitué, qui peut avoir une liaison éther, ester ou amide dans sa chaîne moléculaire,

soit est choisi parmi le 1,6-hexanediol-bis[3-(3,5-di-t-butyl-4-hydroxyphényl)propionate] et le tétrakis- [3-(3,5-di-t-butyl-4-hydroxyphényl)propionate] de pentaérythritol.

**2.** Composition selon la revendication 1, dans laquelle le composé du phosphore (C) est le phosphite de tris-(2,4-di-t-butylphényle) ou l'ester diéthylique de 3,5-di-t-butyl-4-hydroxybenzylphosphonate.

**3.** Composition selon la revendication 1, dans laquelle le composé azoté (D-1) est la cyanoguanidine, l'aminoguanidine ou le diméthylcyanamide.

**4.** Article ou récipient moulé ayant une excellente résistance à une solution aqueuse contenant de l'hypochlorite de sodium, qui est fabriqué par moulage de la composition de polyoxyméthylène selon la revendication 1.

**5.** Article moulé selon la revendication 4, servant de conteneur, de bouchon ou d'élément pulvérisateur pour des agents de blanchiment ou des détergents chlorés, ou de pièce mécanique ou de récipient dans une chaudière, un lave-vaisselle, un compteur à eau ou un lave-linge.